# EUROPÄISCHE PATENTSCHRIFT

(11) **EP 2 895 656 B1**
(45) Veröffentlichungstag und Bekanntmachung des Hinweises auf die Patenterteilung: **20.12.2017**
(21) Anmeldenummer: 13770621.4
(22) Anmeldetag: 30.08.2013
(51) Int. Cl.: E01B 31/02

(54) **VERFAHREN UND VORRICHTUNG ZUR KRAFTABHÄNGIGEN STEUERUNG BEI DER SCHIENENBEARBEITUNG**
METHOD AND DEVICE FOR FORCE-DEPENDENT CONTROLLING IN THE MACHINING OF RAILS
PROCÉDÉ ET DISPOSITIF DE COMMANDE EN FONCTION D'UNE FORCE POUR L'USINAGE DE RAILS

(30) Priorität: 13.09.2012 AT 9982012
(43) Veröffentlichungstag der Anmeldung: 22.07.2015
(73) Patentinhaber: Vossloh MFL Rail Milling GmbH, 8940 Liezen (AT)
(72) Erfinder: HARTL, Erich, A-4663 Laakirchen (AT); NEUHOLD, Wolfgang, A-4810 Gmunden (AT); LIEDL, Gerhart, A-8911 Admont (AT)
(74) Vertreter: Patentanwaltskanzlei Hübscher
(86) Internationale Anmeldenummer: PCT/AT2013/000141
(87) Internationale Veröffentlichungsnummer: WO 2014/040095

(56) Entgegenhaltungen:
- EP-A1- 0 205 723
- EP-A1- 0 444 242
- EP-A1- 0 552 473
- EP-A1- 0 952 255

## Beschreibung

Die Erfindung betrifft ein Verfahren sowie eine Vorrichtung mittels kraftabhängiger Steuerung mindestens einer Andrückvorrichtung und/oder mindestens eines Bearbeitungswerkzeugs zur Schienenbearbeitung an verlegten Schienen.
Die Schienenbearbeitung für verlegte Eisenbahn- bzw. U-Bahnschienen oder Straßenbahnschienen ist, wie z.B. in der Patentanmeldung EP 0952255 A1 erwähnt, grundsätzlich bekannt. Generell sind bei allen Schienenbearbeitungen die Ziele so definiert, dass gleichzeitig eine maximale Entfernung der Fehlerstellen oder Risse je nach Schienenzustand bei einem möglichst geringen Materialabtrag, sowie eine möglichst gute Oberflächengüte bzw. Maßhaltigkeit im Bezug zum Längs- bzw. Querprofil zu erreichen sind. Schleifanwendungen sind hierbei mehr im Bereich der geringen Abtragleistungen, Fräsen mehr im Bereich der größeren Zustelltiefen vertreten. Weiters sind Hobelanwendungen zur Reprofilierung von Schienen bekannt.
Die Anforderungen in Bezug auf die Bearbeitungsgenauigkeit sowie Oberflächengüte werden besonders unter dem Aspekt der geringen Lärmentwicklung des fahrenden Zuges in Folge des zu minimierenden Abrollgeräusches immer höher. Dies stellt erweiterte und neue Herausforderungen für die Bearbeitungsmethoden, besonders im Bezug auf die Schienennachführung der Bearbeitungswerkzeuge, zur Erzielung der oben genannten Anforderungen, dar.
Als Ausgangslage kann in der Praxis aber nicht immer von einer exakten und festen Gleisanlage ausgegangen werden. Obwohl in diesem Falle eine Durcharbeitung des Gleises durch Stopfen zielführend wäre, sind trotzdem auch solche Gleisabschnitte oder Teilbereiche aufgrund des fehlenden Zeitfensters mit einem zufriedenstellenden Bearbeitungsergebnis herzustellen.
Ebenso ist in gewissen Streckenabschnitten generell mit unterschiedlichen Untergrundbedingungen zu rechnen. Dies sind vor allem der Bereich von Weichen, Kreuzungen, aber auch Brücken.
Weiters sind nicht immer die verwendeten Schienenwerkstoffe sowie Wärmebehandlungen der Schiene bekannt bzw. können diese auch abschnittsweise variieren. Dies bedeutet wiederum unterschiedliche Bearbeitungsbedingungen hinsichtlich unterschiedlicher Zerspanbarkeit der Schienen.

Zur Stabilisierung der Schiene und zur Anlage der Bearbeitungswerkzeuge sind im Stand der Technik mehrere Lösungsvorschläge bekannt, die im Prinzip in zwei Untergruppen aufgeteilt werden können.
Einerseits werden Andrückvorrichtungen als Rollen oder anstellbare Gleitelemente - auch als Auflageschuh oder Gleitschuh bezeichnet, verwendet, die die Bearbeitungswerkzeuge zwangsgeführt der Höhe nach nachlenken oder anstellen, wobei auch noch eine unabhängige Zustellbewegung der Bearbeitungswerkzeuge dargestellt werden kann. Beispiel beim Stand der Technik sind hierbei die Patentanmeldungen DE3222208A1 oder EP0952255A1.
Es erfolgt eine Anstellung über mechanische Systeme wie Spindeltriebe, Exzenter, usw. oder über hydraulische oder pneumatische Zylinder mit oder ohne Drucksteuerung. Bei Vorhandensein einer Drucksteuerung wird in einem vorgespannten Zylinder mit definierten und einstellbaren Drücken sowohl auf der Stangen- als auch der Kolbenseite gearbeitet. Derartige Hydraulikzylinder sind auch als HNC-Einheiten bekannt.
im Betrieb derartiger Systeme hat sich aber gezeigt, dass durch äußere Belastungen bei der Schienenbearbeitung, wie z.B. Schnittkräften, es zu erhöhten Kräften in den Führungen und zu Querkräften im Zylinder kommt, was die Reibkräfte wesentlich erhöht und somit das System neu bestimmt werden müsste.
Für die hydraulische Steuerung ist dies aber nicht messbar, da die Reibkräfte zwischen dem Hydraulikzylinder und der Andrückvorrichtung entstehen. Daher ist nicht bekannt, mit welcher Kraft die Andrückvorrichtung an die Schiene angedrückt wird, und da dies nicht messbar ist, ist es damit auch nicht mehr exakt einsteil- bzw. steuerbar.
Neben diesen Reibkräften durch ein Verspannen des Systems gibt es vor allem bei kleinen Bewegungen sowohl in den Führungen als auch im Zylinder Stick-Slip-Effekte, die dazu führen, dass in Summe die Auflagekräfte, die durch die Steuerung im Hydraulikzylinder vorgegeben werden von der Realität am Schienenkopf abweichen.
Bei einer schlechten Gleisanlage, wie sie durch mangelhaft gestopften Untergrund, aber auch durch Erdbewegungen, Wasser oder andere Umwelteinflüsse auftreten kann ist durch konstantes Andrücken mit einer nicht angepassten Kraft mit dem Auftreten von Schwingungen zu rechnen, die das Bearbeitungsergebnis negativ beeinflussen und somit vermieden werden müssen.
Derartige Schwingungen können aber auch in weniger festen Gleisabschnitten auftreten, wie auf Brücken, oder bei Kreuzungen oder Weichen.

Da bis jetzt keine Informationen über die tatsächlich vorhandenen Kräfte an der Andrückvorrichtung und/oder im Bearbeitungswerkzeug bekannt sind, wird die Kraft eher höher eingestellt, um ein gewisses Andrücken sicher zu stellen. Dies wirkt sich durch die hohen Kräfte nachteilig auf den Energieverbrauch und vor allem auf den Verschleiß aller Komponenten, aber insbesondere der Andrückelemente, sowie der Schiene und der Bearbeitungswerkzeuge aus. Wünschenswert ist daher mit möglichst geringen Kräften das Auslangen zu finden.

Durch die Komplexität des Systems und den unbekannten Unterbauten, wie auch den wechselnden Schienenqualitäten ist eine bedienergeführte Bearbeitung notwendig. Der Bediener muss durch manuellen Eingriff in das System meist nach Erfahrungswerten das Gesamtbearbeitungssystem möglichst stabil halten.

Ziel der vorliegenden Erfindung ist es daher, diese dargelegten Nachteile der bestehenden Systeme und die damit verbundenen Probleme bei der Schienenbearbeitung zu lösen und ein Verfahren sowie eine Vorrichtung zu schaffen, die eine optimale Andrückvorrichtung durch eine geregelte Steuerung anhand aufgenommener Auflagekräfte und/oder Schnittkräfte gewährleistet. Dabei soll die Kraftmessung möglichst nahe am tatsächlichen Auflagepunkt, bzw. Bearbeitungspunkt erfolgen, um die angesprochenen Reibkräfte und Störeinflüsse möglichst zu vermeiden und mit geringen Kräften arbeiten zu können.
Das erfindungsgemäße Verfahren sowie die erfindungsgemäße Vorrichtung wird nachfolgend anhand mehrerer Beispiele beschrieben und ist durch Anspruch 1 und die folgenden Ansprüche sowie Anspruch 6 und die folgenden Ansprüche charakterisiert.

Bei dem erfindungsgemäßen Verfahren wird eine Andrückvorrichtung mit einer Kraftmesseinrichtung möglichst nahe an der Schnittstelle Andrückvorrichtung zu Schiene und/oder ein Bearbeitungswerkzeug mit einer weiteren Kraftmesseinrichtung möglichst nahe an der Schnittstelle Bearbeitungswerkzeug zu Schiene vorgeschlagen. Möglichst nahe bedeutet einen Abstand von maximal 150mm.

Dies kann in mehreren Ausführungsvarianten angewendet werden. Anhand einiger Varianten wird die Erfindung näher beschrieben.

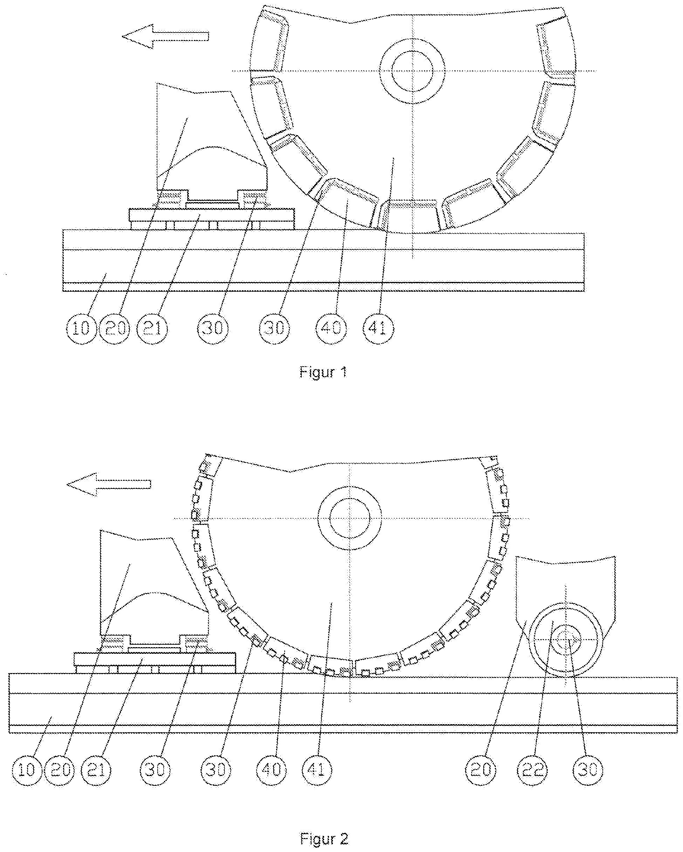

Zur besseren Erläuterung dienen die Figuren 1 und 2
Es zeigt:
Figur 1 eine schematische Anordnung einer Andrückvorrichtung mit Kraftmesseinrichtungen mit einem in Fahrrichtung nachgeordneten Bearbeitungswerkzeug ebenfalls mit Kraftmesseinrichtungen nach einer bevorzugten Ausgestaltung.
Figur 2 eine schematische Anordnung eines Bearbeitungswerkzeugs mit Kraftmesseinrichtungen, sowie eine vor- und eine nachgeordnete Andrückvorrichtung jeweils mit einer Kraftmesseinrichtung nach einer bevorzugten Ausgestaltung.
Es bezeichnet:
- 10: Schiene
- 20: Andrückvorrichtung
- 21: Gleitelement
- 22: Andrückrolle
- 30: Kraftmesseinrichtung
- 40: Aufnahme für Bearbeitungswerkzeuge
- 41: Werkzeugträger

Der besseren Verständlichkeit wegen werden einige Begriffe nachfolgend erläutert. Eine Andrückvorrichtung (20) dient bei der Schienenbearbeitung zur Stabilisierung der Schiene (10) während der Instandhaltungsfahrt und bei der Bearbeitung der Schiene (10) durch das Bearbeitungswerkzeug. Eine derartige Andrückvorrichtung (20) kann als Rolle oder als Gleitelement (21) ausgeführt sein. Weiters kann zumindest eine Andrückvorrichtung (20) einem Bearbeitungswerkzeug zugeordnet sein. Es ist aber auch möglich für mehrere Bearbeitungswerkzeuge nur eine Andrückvorrichtung (20) zu verwenden. In einer Ausführungsvariante ist sowohl zumindest ein Andrückelement in Fahrtrichtung gesehen vor und zumindest ein weiteres nach dem Bearbeitungswerkzeug vorgesehen.
Die Anstellung an die Schiene (10), sprich das Aufbringen der Andrückkraft kann hydraulisch, pneumatisch oder elektromotorisch mit oder ohne mechanische Übersetzung erfolgen.

Ein Bearbeitungswerkzeug kann ein Fräswerkzeug, ein Schleifwerkzeug, ein Hobelwerkzeug nach verschiedenen im Stand der Technik bekannten Ausführungen sein. Da diese Ausführungsformen dem Fachmann bekannt sind, wird hier nicht näher auf die bekannten Ausführungsformen ohne Kraftmesseinrichtung (30) eingegangen.

Die Kraftmessung erfolgt mittels Kraftmesseinrichtungen (30), die nach verschiedenen physikalischen Prinzipien die tatsächlich auftretende Kraft ermitteln. Die Kraftmessung kann über Sensoren erfolgen, die auf dem piezoelektrischen oder dem piezoresistiven Effekt beruhen. Weitere mögliche Sensoren sind als Dehnmessstreifen (DMS) bekannt und arbeiten auf Basis sich veränderlichen Widerstands.
Weiters können über induktive, kapazitive oder optische Wegaufnehmer die Verformungen an elastischen Körpern bestimmt werden und so auf die vorhandene Kraft geschlossen werden. Auch diese Anwendungen sind aus anderen technischen Anwendungen bekannt und daher wird auf eine genaue Beschreibung der unterschiedlichen Sensoraufbauten hier verzichtet.
Die Datenübertragung sowohl zu einem eventuellen Verstärker, wie auch zur Auswerteeinheit und zur Steuerung kann über herkömmliche Kabel oder auch drahtlos erfolgen. Zur drahtlosen Übertragung eignen sich beispielsweise Technologien wie RFID oder auch Bluetooth oder Infrarot.

Die Figur 1 zeigt schematisch eine Andrückvorrichtung (20) mit einer Kraftmesseinrichtung (30), die die tatsächlich auftretende Kraft, die die Andrückvorrichtung (20) auf die Schiene (10) ausübt, misst. Die Messung und das Wissen über die tatsächliche Kraft erlauben die aktive Steuerung dieser Größe und damit ein wesentlich besseres Steuern des Bearbeitungsprozesses.
Durch die Messung der Kraft an der unmittelbaren Nähe des Wirkens, also ohne bedeutende Reibungs- und Verspannungsverluste im System kann diese als aktive Steuergröße für die Anpresskraft während der Schienenbearbeitung herangezogen werden.
Ebenso sind durch das Wissen der Kraft und das bekannte Wissen der Position Informationen über den Untergrund und insgesamt den Gleisaufbau möglich und können für die Steuerung der Anpresskraft der Andrückvorrichtung (20), aber auch für die Steuerung der Bearbeitungseinheit herangezogen werden.
Bei der Bearbeitungsvorrichtung können hier ebenso die Anstellkraft, die Drehzahl, die Zustelltiefe und der Vorschub als wichtigste Parameter geregelt werden.

Eine weitere Möglichkeit neben der Kraftmessung an zumindest einem Anpresselement ist die Kraftmessung am Bearbeitungswerkzeug. Hier kann über Kraftmesseinrichtungen (30) neben der Anpresskraft insbesondere die Schnittkraft, sprich die Kraft an der Schneide während der Bearbeitung, gemessen werden. Bei Schleifwerkzeugen wird hier die Kraft auf die Schleifmittel bestimmt.
In Figur 1 und 2 ist auch ein beispielhaftes Fräswerkzeug dargestellt, in dem die Kraftmesseinheiten zumindest bei einem Schneidelement, bei einer Schneidenelementreihe oder einer Schneidenkassette angeordnet sind.
Es ist möglich jede einzelne Schneide, aber auch nur einen gewünschten Bruchteil an Schneiden mit Kraftmesseinrichtungen (30) auszurüsten. Vorteilhafterweise wird bei teilweisem Ausrüsten von Schneiden eine symmetrische Winkelteilung gewählt, dass die Kraftmesselemente über den Umfang gleich verteilt sind.
Es ist auch möglich die Kraftmesseinrichtungen (30) an der Schnittstelle zwischen Werkzeugträger (41) und Spindel oder in der Lagerung der Bearbeitungsspindel anzubringen und hier die auftretenden Kräfte zu messen und damit der Steuerung als Information zuzuführen. Mit den Daten der Schnittkraft kann wiederum die Anpressvorrichtung und/oder das Bearbeitungswerkzeug gesteuert werden.

In der Figur 2 ist ein Andrückelement vor und ein weiteres nach dem Bearbeitungswerkzeug angeordnet. Die Anordnung Gleitelement (21), bzw. Andrückrolle (22) ist hier nur beispielhaft gegeben. Natürlich können auch zwei Andrückrollen (22), zwei Gleitelemente (21), oder eine umgekehrte Anordnung getroffen werden.
Durch das Verwenden von zwei Andrückelementen kann das System in sich nochmais stabiler dargestellt werden und die Gefahr von Schwingungen wird nochmals verringert.
In diesem Fall kann die Kraftmessung am zweiten Andrückelement auch gleichzeitig zur Erfassung des bearbeiteten Schienenzustandes herangezogen werden. Speziell ist es möglich dadurch Oberflächenrauheiten und insbesondere Welligkeiten zu bestimmen.

Durch die Information über die tatsächlich auftretenden Kräfte in der Andrückvorrichtung (20) und/oder dem Bearbeitungswerkzeug ist es möglich, den Prozess insgesamt wesentlich exakter und mit geringeren Kräften und damit auch reduziertem Energieaufwand zu betreiben. Durch die geringen Kräfte ist ein geringerer Verschleiß an den Komponenten, insbesondere der Andrückvorrichtung (20), der Schiene (10), aber auch des Bearbeitungswerkzeugs gegeben.
Es ist möglich frühzeitig geänderte Bedingungen von Gleisunterbau, von Schwankungen im Schienenmaterial und ähnliches in die Steuerung aktiv einzusteuern und damit die jeweils optimalen Bedingungen einzustellen. Ebenso kann das Auftreten eventueller Schwingungen bereits frühzeitig erkannt werden und auch hier entsprechend eingegriffen werden.
Weiters ist eine Schienenbearbeitung nach dem erfindungsgemäßen Verfahren und/oder der Verwendung der erfindungsgemäßen Vorrichtung einfacher automatisierbar und der Bedienereinfluss wesentlich geringer.
Somit ist es mit der vorliegenden Erfindung möglich, eine optimale kräfteabhängige Steuerung der Andrückvorrichtung (20) und/oder eine kraftabhängige Steuerung der Schnittkraft des Bearbeitungswerkzeuges, und damit eine optimale Schienenbearbeitung, zu gewährieisten.
Das erfindungsgemäße Verfahren sowie die erfindungsgemäße Vorrichtung wird in den Hauptansprüchen 1 und 6, sowie jeweils in den abhängigen Ansprüchen 2-5 und 7-11 beschrieben.

## Patentansprüche

1. Verfahren zur Steuerung mindestens einer Andrückvorrichtung (20) und mindestens eines Bearbeitungswerkzeuges welche auf einem Schienenfahrzeug montiert sind und zur Schienenbearbeitung an einer verlegten Schiene (10) dienen, **dadurch gekennzeichnet, dass** zur Stabilisierung der Schiene (10) während einer Instandhaltungsfahrt und bei der Bearbeitung der Schiene (10) durch das Bearbeitungswerkzeug zumindest die Kräfte an mindestens einer Andrückvorrichtung (20) und/oder die Kräfte an mindestens einer Bearbeitungsvorrichtung gemessen werden und als Steuergröße für den Schienenbearbeitungsvorgang verwendet werden.

2. Verfahren nach Anspruch 1, **dadurch gekennzeichnet, dass** die Information der Messergebnisse für die Steuerung der Anpresskraft der Andrückvorrichtung (20) verwendet wird.

3. Verfahren nach Anspruch 1, **dadurch gekennzeichnet, dass** die Information der Messergebnisse für die Steuerung der Bearbeitungsvorrichtung, insbesondere der Anstellkraft, der Drehzahl, der Zustelltiefe oder des Vorschubs dieser verwendet wird.

4. Verfahren nach mindestens einem der Ansprüche 1 bis 3, **dadurch gekennzeichnet, dass** zumindest eine Andrückvorrichtung (20) in Fahrtrichtung vor oder nach dem Bearbeitungswerkezug angeordnet ist.

5. Verfahren nach mindestens einem der Ansprüche 1 bis 3, **dadurch gekennzeichnet, dass** zumindest eine Andrückvorrichtung (20) in Fahrtrichtung vor und zumindest eine weitere in Fahrtrichtung nach dem Bearbeitungswerkzeug angeordnet ist.

6. Vorrichtung zur Stabilisierung einer verlegten Schiene (10) während einer Instandhaltungsfahrt und zur kraftabhängigen Steuerung bei der Bearbeitung der Schiene (10), wobei die Vorrichtung auf einem Schienenfahrzeug montierbar ist, **dadurch gekennzeichnet, dass** diese aus einer Andrückvorrichtung (20), einem Bearbeitungswerkzeug und einer Kraftmesseinrichtung (30) ausgebildet ist, und dass die Kraftmesseinrichtung (30) an der Andrückvorrichtung (20) oder an dem Bearbeitungswerkzeug positioniert ist, wobei die Kraftmesseinrichtung (30) die auftretenden Kräfte an mindestens dieser Andrückvorrichtung (20) und/oder mindestens dem Bearbeitungswerkzeug messen und ermitteln kann und dieses Ausgabesignal als Steuergröße für den Schienenbearbeitungsvorgang verwendet werden kann.

7. Vorrichtung nach Anspruch 6, **dadurch gekennzeichnet, dass** diese als piezoelektrische oder piezoresistive Kraftmesseinrichtung (30) ausgeführt ist.

8. Vorrichtung nach Anspruch 6, **dadurch gekennzeichnet, dass** diese als Dehnmessstreifen als Kraftmesseinrichtung (30) ausgeführt ist.

9. Vorrichtung nach Anspruch 6, **dadurch gekennzeichnet, dass** diese über induktive, kapazitive oder optische Wegaufnehmer zur Ermittlung der elastische Verformungen als Kraftmesseinrichtung (30) ausgeführt ist.

10. Vorrichtung nach mindestens einem der Ansprüche 6 bis 9, **dadurch gekennzeichnet, dass** die Signalübermittlung drahtlos erfolgen kann.

11. Vorrichtung nach mindestens einem der Ansprüche 6 bis 10, **dadurch gekennzeichnet, dass** diese einen maximalen Abstand von 150mm zur Schiene (10) aufweisen kann.

## Claims

1. Method for controlling at least one pressing device (20) and at least one machining tool which are mounted on a rail vehicle and serve to machine a laid rail (10), **characterised in that** in order to stabilise the rail (10) during a maintenance run and during machining of the rail (10) by the machining tool at least the forces on at least one pressing device (20) and/or the forces on at least one machining device are measured and are used as a control variable for the rail machining operation.

2. Method as claimed in claim 1, **characterised in that** the information of the measurement results is used for control of the pressing force of the pressing device (20).

3. Method as claimed in claim 1, **characterised in that** the information of the measurement results is used for control of the machining device, in particular the positioning force, the rotational speed, the infeed depth or the advance thereof.

4. Method as claimed in at least one of claims 1 to 3, **characterised in that** at least one pressing device (20) is disposed upstream or downstream of the machining tool in the travel direction.

5. Method as claimed in at least one of claims 1 to 3, **characterised in that** at least one pressing device (20) is disposed upstream of the machining tool in the travel direction and at least one further pressing device is disposed downstream of the machining tool in the travel direction.

6. Device for stabilising a laid rail (10) during a maintenance run and for force-dependent control during the machining of the rail (10), wherein the device can be mounted on a rail vehicle, **characterised in that** this device is formed of a pressing device (20), a machining tool and a force measuring unit (30), and that the force measuring unit (30) is positioned on the pressing device (20) or on the machining tool, wherein the force measuring unit (30) can measure and determine the forces arising at at least this pressing device (20) and/or at least the machining tool, and this output signal can be used as a control variable for the rail machining operation.

7. Device as claimed in claim 6, **characterised in that** this device is designed as a piezoelectric or piezoresistive force measuring device (30).

8. Device as claimed in claim 6, **characterised in that** this device is designed as a strain gauge as a force measuring unit (30) *[sic].*

9. Device as claimed in claim 6, **characterised in that** this device is designed as a force measurement unit (30) by means of inductive, capacitive or optical displacement transducers for determining the elastic deformations.

10. Device as claimed in at least one of claims 6 to 9, **characterised in that** the signal transmission can be effected wirelessly.

11. Device as claimed in at least one of claims 6 to 10, **characterised in that** this device can comprise a maximum distance of 150 mm to the rail (10).

## Revendications

1. Procédé pour la commande au moins d'un dispositif de pression (20) et au moins d'un outil d'usinage, lesquels sont montés sur un véhicule ferroviaire et servent pour l'usinage de rails au niveau d'un rail (10) posé, **caractérisé en ce qu'**au moins les forces au niveau au moins d'un dispositif de pression (20) et/ou les forces au niveau au moins d'un dispositif d'usinage sont mesurées pour stabiliser le rail (10) pendant un trajet de maintenance et lors de l'usinage du rail (10) par l'outil d'usinage, et sont utilisées en tant que grandeur de commande pour l'opération d'usinage des rails.

2. Procédé selon la revendication 1, **caractérisé en ce que** l'information concernant les résultats de mesure est utilisée pour la commande de la force de pression du dispositif de pression (20).

3. Procédé selon la revendication 1, **caractérisé en ce que** l'information concernant les résultats de mesure est utilisée pour la commande du dispositif d'usinage, en particulier de la force d'application, du nombre de tours, de la profondeur de passe ou de l'avancée de celui-ci.

4. Procédé selon au moins l'une des revendications 1 à 3, **caractérisé en ce qu'**au moins un dispositif de pression (20) est disposé dans le sens du trajet avant ou après l'outil d'usinage.

5. Procédé selon au moins l'une des revendications 1 à 3, **caractérisé en ce qu'**au moins un dispositif de pression (20) est disposé dans le sens du trajet avant et au moins un autre dans le sens du trajet après l'outil d'usinage.

6. Dispositif pour la stabilisation d'un rail (10) posé pendant un trajet de maintenance et pour la commande en fonction d'une force lors de l'usinage du rail (10), le dispositif pouvant être monté sur un véhicule ferroviaire, **caractérisé en ce que** celui-ci est formé d'un dispositif de pression (20), d'un outil d'usinage et d'un dispositif de mesure de force (30), et **en ce que** le dispositif de mesure de force (30) est positionné au niveau du dispositif de pression (20) ou au niveau de l'outil d'usinage, le dispositif de mesure de force (30) mesurant et pouvant déterminer les forces apparaissant au niveau au moins de ce dispositif de pression (20) et/ou au moins au niveau de l'outil d'usinage et utilisant ce signal de sortie en tant que grandeur de commande pour l'opération d'usinage des rails.

7. Dispositif selon la revendication 6, **caractérisé en ce que** celui-ci est réalisé en tant que dispositif de mesure de force (30) piézorésistif ou piézoélectrique.

8. Dispositif selon la revendication 6, **caractérisé en ce que** celui-ci est réalisé en tant que jauge de contrainte en tant que dispositif de mesure de force (30).

9. Dispositif selon la revendication 6, **caractérisé en ce que** celui-ci est réalisé par le biais d'un transducteur inductif, capacitif ou optique, pour la détermination de déformations élastiques, en tant que dispositif de mesure de force (30).

10. Dispositif selon au moins l'une des revendications 6 à 9, **caractérisé en ce que** la transmission des signaux peut être effectuée sans fil.

11. Dispositif selon au moins l'une des revendications 6 à 10, **caractérisé en ce que** celui-ci peut indiquer un espacement maximal de 150 mm par rapport au rail (10).
